(19) Europäisches Patentamt
European Patent Office
Office européen des brevets

(11) **EP 0 726 644 B1**

(12) **EUROPÄISCHE PATENTSCHRIFT**

(45) Veröffentlichungstag und Bekanntmachung des Hinweises auf die Patenterteilung:
**04.09.1996   Patentblatt 1996/36**

(51) Int Cl.6: **H02P 5/178**

(21) Anmeldenummer: **95101561.9**

(22) Anmeldetag: **06.02.1995**

(54) **Verfahren zum Betrieb eines aus einer Gleichspannungsquelle gespeisten Kommutatormotors**

Method for operating a DC voltage supplied commutator motor

Méthode d'utilisation d'un moteur à commutateur alimenté sous une tension continue

(84) Benannte Vertragsstaaten:
**DE FR GB IT**

(43) Veröffentlichungstag der Anmeldung:
**14.08.1996   Patentblatt 1996/33**

(73) Patentinhaber: **SIEMENS AKTIENGESELLSCHAFT 80333 München (DE)**

(72) Erfinder:
• **Klein, Hans-Wilhelm, Dipl.-Ing. D-97078 Würzburg (DE)**
• **Targacz, Stefan D-97084 Würzburg (DE)**

(56) Entgegenhaltungen:
**EP-A- 0 037 114**          **EP-A- 0 433 491**

## Beschreibung

Verfahren zum Betrieb eines aus einer Gleichspannungsquelle gespeisten Kommutatormotors

Die Erfindung bezieht sich auf ein Verfahren zum Betrieb eines aus einer Gleichspannungsquelle gespeisten Kommutatormotors gemäß Oberbegriff des Anspruchs 1.

Durch die Druckschrift "Kohlebürsten" der Firma Schunk & Ebe GmbH Gießen, 1980 ist der Einfluß der Bürstenpolarität auf den Bürstenverschleiß dahingehend bekannt, daß durch das elektrische Feld der kathodisch polarisierten Bürsten die Wanderung von Kupferionen an die Oberfläche der Kontaktpunkte des Rotors begünstigt und dadurch die Lauffläche relativ rauh wird, was zu erhöhtem Bürstenverschleiß dieser Bürste führt. Durch diesen sogenannten Polaritätseffekt ist die Betriebsstandzeit derartiger Motoren, insbesondere im Fall von zweipoligen Reihenschlußmotoren, die aus einem Wechselspannungsnetz über einen Gleichrichter gespeist werden, maßgeblich reduziert. Es hat sich gezeigt, daß durch besondere Materialwahl der Bürsten die Bürstenstandzeiten nicht wesentlich erhöht werden können.

Es ist daher Aufgabe vorliegender Erfindung, mit einfachen Mitteln trotz des bekannten unvermeidbaren Polaritätseffektes die Betriebsstandzeiten eines aus einer Gleichspannungsquelle gespeisten Kommutatormotors, insbesondere eines Waschautomatenantriebes, dessen Schleuderbetrieb aus Gründen der Optimierung der Trommelaufhängung bzw. der Schwingungsdämpfung sowie der Bürstenverschiebung zur Einstellung einer drehzahlverändernden Bürstenverschiebung in jeweils nur einer gleichbleibenden Drehrichtung erfolgt, mit einfachen Mitteln erhöhen zu können. Die Lösung dieser Aufgabe gelingt durch den kennzeichnenden Verfahrensschritt gemäß Patentanspruch 1; vorteilhafte Ausgestaltungen der Erfindung sind jeweils Gegenstand der Unteransprüche.

Durch das erfindungsgemäße Verfahren läßt sich durch einen einfachen Anschlußwechsel der Bürstenanschlüsse und der Erregerwicklungsanschlüsse bei Beibehaltung der betriebsmäßig erforderlichen nur einen Drehrichtung erreichen, daß der Bürstenverschleiß durch den Einfluß der Bürstenpolarität auf beide Bürsten gleichmäßig verteilt und somit insgesamt eine wesentliche Erhöhung der Bürstenstandzeit gewährleistet werden kann.

Die Erfindung sowie weitere vorteilhafte Ausgestaltungen der Erfindung werden im folgenden anhand schematisch dargestellter Schaltungsbeispiele in der Zeichnung näher erläutert; darin zeigen:

FIG 1    ein erstes Anschlußschema der Bürstenanschlüsse und der Erregerwicklungsanschlüsse vor einem Anschlußwechsel;

FIG 2    ein zweites Anschlußschema der Bürstenanschlüsse bzw. der Erregerwicklungsanschlüsse nach einem Anschlußwechsel bei gleicher Drehrichtung wie in FIG 1;

FIG 3    ein erstes Schaltungsbeispiel eines aus einem Einphasen-Wechselstromnetz über einen Gleichrichter gespeisten Waschautomatenantriebes im Schleuderbetrieb ohne Feldschwächung;

FIG 4    die Schaltungsanordnung gemäß FIG 3 jedoch mit einer Feldschwächung durch Feldanzapfung der Erregerwicklung.

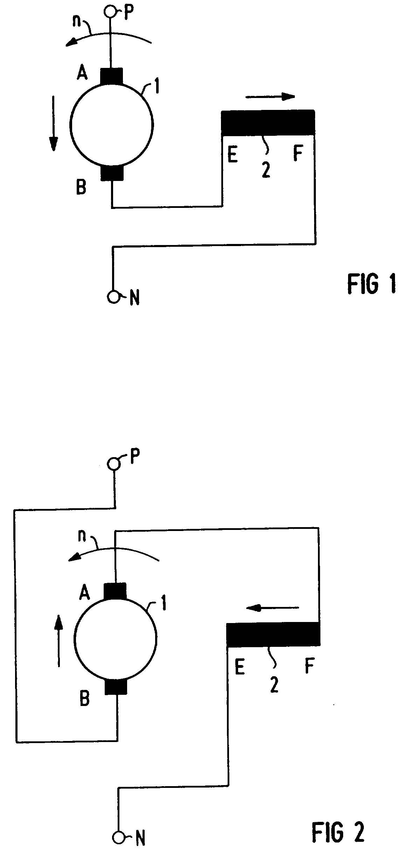

FIG 1 zeigt in einem Prinzipschaltbild einen Kommutatormotor 1, dessen Rotorwicklung über Bürstenanschlüsse A;B aus einer Gleichspannungsquelle mit den Polen P;N gespeist wird; in Reihe mit der Rotorwicklung des Kommutatormotors 1 liegt eine Erregerwicklung 2 mit äußeren Erregerwicklungsanschlüssen E;F. Bei dem in FIG 1 dargestellten Anschlußschema liegen der Bürstenanschluß A an dem Pol P und der Bürstenanschluß B an dem Pol N der Gleichspannungsquelle; die Rotorwicklung des Kommutatormotors 1 und die damit in Reihe liegende Erregerwicklung 2 werden jeweils in der durch die Pfeile angedeuteten Stromrichtung durchflossen.

FIG 2 zeigt das Schaltschema gemäß FIG 1 nach einem Anschlußwechsel, derart daß nicht mehr der Bürstenanschluß A sondern der Bürstenanschluß B mit dem positiven Pol P der Gleichspannungsquelle und der Bürstenanschluß A mit dem negativen Pol N der Gleichspannungsquelle verbunden ist; durch gleichzeitiges Umpolen der Erregerwicklungsanschlüsse E bzw. F ist gewährleistet, daß bei der eingetragenen, zu dem Schaltschema gemäß FIG 1 entgegengesetzten Stromrichtung in der Rotorwicklung bzw. der Erregerwicklung die eingezeichnete Drehrichtung des Rotors und somit des Antriebes unverändert bleibt.

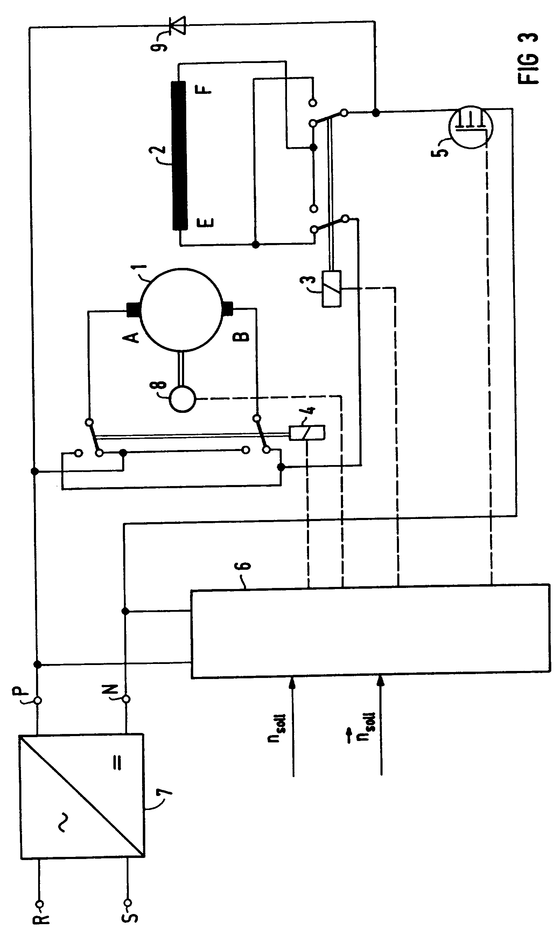

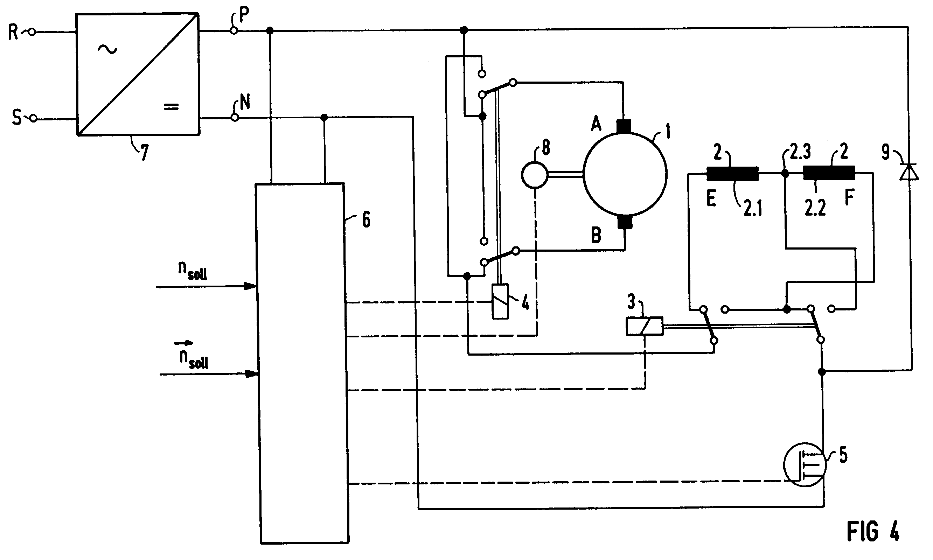

FIG 3,4 zeigen zwei praktische Ausführungen eines Schaltschemas für einen aus einem Haushalts-Einphasenwechselstromnetz R;S über einen Gleichrichter 7 gespeisten Waschautomatenantriebes, dessen Erregerwicklung 2 gemäß FIG 3 konstant und gemäß FIG 4 durch Feldanzapfung im Sinne unterschiedlicher Schleuderdrehzahlen veränderbar ist.

Im einzelnen wird jeweils eine Kommutatormotor 1 über einen Gleichrichter 7 aus einem Einphasenwechselstromnetz R;S über die Bürstenanschlüsse A;B und eine in Reihe mit der Rotorwicklung des Kommutatormotors 1 liegende Erregerwicklung 2 mit den äußeren Erregerwicklungsanschlüssen E;F gespeist. In der Reihenschaltung der Rotorwicklung und der Erregerwicklung liegt ein Stellglied 5 in Form eines MOS-Transistors zur Unterbrechung der Verbindung zwischen dem Gleichrichter 7 und dem Kommutatormotor 1. Parallel zu den Motorwicklungen des Kommutatormotors 1 ist in üblicher Weise eine Freilaufdiode 9 vorgesehen. Zur Steuerung des Waschautomatenantriebes dient eine Steuer- bzw. Regelvorrichtung 6, der u.a. eine Solldreh-

zahl $n_{soll}$ und eine Solldrehrichtung $\vec{n}_{soll}$ für den Schleuderbetrieb des Waschautomatenantriebs vorgegeben ist. Zum erfindungsgemäßen Anschlußwechsel der Bürstenanschlüsse A;B und der äußeren Erregerwicklungsanschlüsse E;F ist jeweils ein Umschalter 3 für die Erregerwicklung bzw. ein Umschalter 4 für die Rotorwicklung 2 vorgesehen. Zur Unterbrechung der Verbindung der Pole P;N am Ausgang des Gleichrichters 7 mit dem Kommutatormotor 1 dient in dessen Zuleitung ein Stellglied 5, z.B. in Form eines MOS-Transistors.

Sämtliche stromführenden Leitungen sind in FIG 3,4 mit ausgezogener Kontur, sämtliche von der Steuer- bzw. Regelvorrichtung 6 ausgehenden Steuerleitungen mit strichlierter Kontur dargestellt.

FIG 3 zeigt eine erste Ausführung mit einer unveränderlichen Erregerwicklung 2, die mit ihren äußeren Wicklungsanschlüssen E;F über den Umschalter 3 in Reihe mit der Rotorwicklung des Kommutatormotors 1 an die Pole P;N des Gleichrichters 7 anschließbar ist. Durch Betätigen der Umschalter 3 und 4 ist der erfindungsgemäße Anschlußwechsel derart möglich, daß der Bürstenanschluß A bei Betätigung des Umschalters 4 von seiner Kontaktierung mit dem positiven Pol P des Gleichrichters 7 auf eine Kontaktierung mit dem negativen Pol N des Gleichrichters 7 wechselt; in gleicher Weise wechselt durch Betätigung des Umschalters 3 der Anschluß der Erregerwicklung 2, so daß nach Betätigung beider Umschalter 3 bzw.4 der Kommutatormotor 1 weiterhin in gleicher Drehrichtung betrieben ist.

FIG 4 zeigt die grundsätzlich gleiche Anordnung wie FIG 3, jedoch ist zusätzlich eine Feldschwächung dadurch vorgesehen, daß die Erregerwicklung 2 zwischen ihren beiden äußeren Wicklungsanschlüssen E;F durch eine Zwischenanzapfung 2.3 in zwei Erregerwicklungsteile 2.1 bzw.2.2 unterteilbar und durch Teilspeisung eine Feldschwächung mit entsprechender Drehzahländerung im Schleuderbetrieb möglich ist.

Nach einer ersten Ausgestaltung der Erfindung ist ein Anschlußwechsel während einer kurzzeitigen Anschlußunterbrechung zwischen dem Kommutatormotor 1 einerseits und der Gleichstromquelle andererseits vorgesehen, die durch das Stellglied 5 erfolgen kann; falls wie im Fall der FIG 4 eine Erregerwicklungsumschaltung zum Zwecke einer drehzahländernden Erregerfeld-Schwächung bzw. Erregerfeld-Verstärkung vorgesehen ist, erfolgt zweckmäßigerweise der Anschlußwechsel gleichzeitig mit der Erregerwicklungsumschaltung. Gemäß erfindungsgemäßen Ausgestaltungen erfolgt ein Anschlußwechsel innerhalb einer einzelnen Schleuderphase eines Schleuderprogramms eines Waschautomaten oder auch jeweils nur zwischen den einzelnen Schleuderphasen eines Schleuderprogramms, insbesondere bei einem sogenannten Intervallschleudern, oder in noch weiterer Vereinfachung lediglich zwischen zwei Schleuderprogrammen im Anschluß bzw. innerhalb zweier Gesamtwäschen; im letzten Fall kann die Anschlußzuordnung der einen Wäsche in der Steuer- bzw. Regelvorrichtung 6 abgespeichert und vor dem Schleuderprogramm der nächsten Wäsche erfindungsgemäß gewechselt werden.

Um eine möglichst gleichmäßige Verteilung der Bürstenanschlüsse A bzw.B auf die eine bzw. andere Polarität P bzw.N der Gleichrichterspannungsquelle am Ausgang des Gleichrichters 7 gewährleisten zu können, ist nach einer Ausgestaltung der Erfindung die Erfassung der Umdrehungsdrehzahlen des Rotors des Kommutatormotors 1, z.B. durch einen Drehzahlgeber 8, insbesondere in Form eines Tachogenerators und eine die Abwicklung der beschliffenen Kommutatorfläche und damit der jeweiligen Kontaktzeit repräsentierende Integration der Istwerte des Drehzahlgebers 8 vorgesehen, wobei zur Integration zweckmäßigerweise die an sich vorhandene Steuer- bzw. Regelvorrichtung 6, insbesondere in Form eines Mikrokontrollers, mitverwendet wird. Eine besonders einfache, ohne Istwertüberwachung durchführbare ausgeglichene Polaritätsverteilung der Bürstenanschlüsse A bzw.B auf die Pole P bzw.N der Gleichspannungsquelle kann durch einen Anschlußwechsel in Abhängigkeit von in der Steuer- bzw. Regelvorrichtung 6 abgespeicherten Sollwerten für die Betriebszeit bzw. die Umdrehungzahl des Rotors des Kommutatormotors 1 in dem einen, mit nur einer Drehrichtung betriebenen Betriebsbereich erreicht werden.

**Patentansprüche**

1. Verfahren zum Betrieb eines aus einer Gleichspannungsquelle gespeisten Kommutatormotors (1), insbesondere eines über einen Gleichrichter (7) aus einem Einphasenwechselstromnetz (R;S) gespeisten Waschautomatenantriebs im Schleuderbetrieb, mit einer über Bürstenanschlüsse (A bzw. B) an die Gleichspannungsquelle anschließbaren Rotorwicklung (1) und mit einer über Wicklungsanschlüsse (E bzw.F) an die Pole (P bzw.N) der Gleichspannungsquelle anschließbaren Erregerwicklung (2) sowie mit zumindest einem Betriebsbereich mit nur einer Drehrichtung ($\vec{n}$), **gekennzeichnet durch** einen Anschlußwechsel der Bürstenanschlüsse (A bzw.B) und der Wicklungsanschlüsse (E bzw.F) während des einen Betriebsbereichs im Sinne einer im wesentlichen zeitgleichen Zuordnung jedes der beiden Bürstenanschlüsse (A bzw.B) zu jedem der beiden Pole (P bzw.N) der Gleichspannungsquelle.

2. Verfahren nach dem vorhergehenden Anspruch, **gekennzeichnet durch** eine Reihenschaltung der Rotorwicklung mit der Erregerwicklung (2) und durch einen Anschlußwechsel sowohl der Bürstenanschlüsse (A bzw.B) der Rotorwicklung als auch der Wicklungsanschlüsse (E bzw.F) der Erregerwicklung (2).

**3.** Verfahren nach zumindest einem der vorhergehenden Ansprüche, **gekennzeichnet durch** einen Anschlußwechsel während einer kurzzeitigen Anschlußunterbrechung zwischen dem Kommutatormotor (1) einerseits und der Gleichspannungsquelle andererseits während des einen Betriebsbereichs.

**4.** Verfahren nach zumindest einem der vorhergehenden Ansprüche, **gekennzeichnet durch** einen Anschlußwechsel während einer Erregerwicklungsumschaltung zum Zwecke einer drehzahländernden Erregerfeld-Schwächung bzw. Erregerfeld-Verstärkung.

**5.** Verfahren nach zumindest einem der vorhergehenden Ansprüche , **gekennzeichnet durch** einen Anschlußwechsel innerhalb einer einzelnen Schleuderphase eines Schleuderprogramms eines Waschautomaten.

**6.** Verfahren nach zumindest einem der vorhergehenden Ansprüche, **gekennzeichnet durch** einen Anschlußwechsel zwischen den einzelnen Schleuderphasen eines Schleuderprogramms eines Waschautomaten.

**7.** Verfahren nach zumindest einem der vorhergehenden Ansprüche, **gekennzeichnet durch** einen Anschlußwechsel zwischen zwei Schleuderprogrammen.

**8.** Verfahren nach zumindest einem der vorhergehenden Ansprüche, **gekennzeichnet durch** einen Anschlußwechsel in Abhängigkeit von einem die Umdrehungszahl des Kommutatormotors (1) in dem einen Betriebsbereich erfassenden Drehzahlgeber (8).

**9.** Verfahren nach Anspruch 8, **gekennzeichnet durch** Integration der Istwerte des Drehzahlgebers (8) in einer, insbesondere für die Steuerung bzw. Regelung des Kommutatormotors (1) an sich vorgesehenen, Steuer- bzw. Regelvorrichtung (6), insbesondere einem Mikrokontroller.

**10.** Verfahren nach zumindest einem der vorhergehenden Ansprüche, **gekennzeichnet durch** einen Anschlußwechsel in Abhängigkeit von in einer Steuer- bzw. Regelvorrichtung (6), insbesondere einem Mikrokontroller, abgespeicherten Sollwerte für die Betriebszeit bzw. Umdrehungszahl des Kommutatormotors (1) in dem einen Betriebsbereich.

**Claims**

**1.** Method for operating a commutator motor (1) which is fed from a DC voltage source, in particular an automatic washing machine drive, which is fed via a rectifier (7) from a single-phase AC mains (R;S), in the spinning mode, having a rotor winding (1), which can be connected via brush connections (A and B) to the DC voltage source, and having an exciter winding (2), which can be connected via winding connections (E and F) to the poles (P and N) of the DC voltage source, and also having at least one operating range with only one direction of rotation ($\vec{n}$), characterized by a connection change of the brush connections (A and B) and of the winding connections (E and F) during the one operating range in the sense of an essentially contemporaneous assignment of each of the two brush connections (A and B) to each of the two poles (P and N) of the DC voltage source.

**2.** Method according to the preceding claim, characterized by a series circuit formed by the rotor winding and the exciter winding (2), and by a connection change both of the brush connections (A and B) of the rotor winding and of the winding connections (E and F) of the exciter winding (2).

**3.** Method according to at least one of the preceding claims, characterized by a connection change during a momentary connection interruption between the commutator motor (1), on the one hand, and the DC voltage source, on the other hand, during the one operating range.

**4.** Method according to at least one of the preceding claims, characterized by a connection change during an exciter winding changeover for the purpose of rotational speed-changing exciter field weakening or exciter field strengthening.

**5.** Method according to at least one of the preceding claims, characterized by a connection change within an individual spinning phase of a spinning programme of an automatic washing machine.

**6.** Method according to at least one of the preceding claims, characterized by a connection change between the individual spinning phases of a spinning programme of an automatic washing machine.

**7.** Method according to at least one of the preceding claims, characterized by a connection change between two spinning programmes.

**8.** Method according to at least one of the preceding claims, characterized by a connection change as a function of a rotational speed sensor (8) which detects the number of revolutions of the commutator motor (1) in the one operating range.

9. Method according to Claim 8, characterized by integration of the actual values of the rotational speed sensor (8) in a control and regulating device (6), in particular a microcontroller, which is intrinsically provided, in particular, for controlling and regulating the commutator motor (1).

10. Method according to at least one of the preceding claims, characterized by a connection change as a function of desired values for the operating time and/or number of revolutions of the commutator motor (1) in the one operating range, which desired values are stored in a control and regulating device (6), in particular a microcontroller.

**Revendications**

1. Procédé pour faire fonctionner un moteur (1) à collecteur alimenté par une source de tension continue, notamment d'un dispositif d'entraînement d'une machine à laver automatique alimentée par l'intermédiaire d'un redresseur (7) à partir d'un réseau (R;S) de courant alternatif monophasé en fonctionnement d'essorage, comportant un enroulement (1) de rotor pouvant être connecté par l'intermédiaire de bornes (A et B) de balai à la source de tension continue et un enroulement (2) d'excitation pouvant être connecté aux pôles (P et N) de la source de tension continue par l'intermédiaire de bornes (E et F) d'enroulement et ayant au moins une zone de fonctionnement à un seul sens ($\vec{n}$) de rotation, caractérisé par un changement de raccordement des bornes (A et B) de balai et des bornes (E et S) d'enroulement pendant l'une des zones de fonctionnement en vue d'une association sensiblement isochrone de chacune des deux bornes (A et B) de balai à chacun des deux pôles (P et N) de la source de tension continue.

2. Procédé suivant la revendication précédente, caractérisé par un branchement en série de l'enroulement du rotor avec l'enroulement (2) d'excitation et par un changement de raccordement à la fois des bornes (A et B) de balai de l'enroulement de rotor et des bornes (E et F) de l'enroulement (2) d'excitation.

3. Procédé suivant au moins l'une des revendications précédentes, caractérisé par un changement de raccordement pendant une brève interruption du raccordement entre le moteur (1) à collecteur d'une part et la source de tension continue d'autre part pendant l'une des zones de fonctionnement.

4. Procédé suivant au moins l'une des revendications précédentes, caractérisé par un changement de raccordement pendant une commutation d'enroulement d'excitation en vue d'un affaiblissement du champ d'excitation ou d'une amplification du champ d'excitation, qui change la vitesse de rotation.

5. Procédé suivant au moins l'une des revendications précédentes, caractérisé par un changement de raccordement pendant une seule phase d'essorage d'un programme d'essorage d'une machine à laver automatique.

6. Procédé suivant au moins l'une des revendications précédentes, caractérisé par un changement de raccordement entre les diverses phases d'essorage d'un programme d'essorage d'une machine à laver automatique.

7. Procédé suivant au moins l'une des revendications précédentes, caractérisé par un changement de raccordement entre deux programmes d'essorage.

8. Procédé suivant au moins l'une des revendications précédentes, caractérisé par un changement de raccordement en fonction d'un indicateur (8) de vitesse de rotation détectant le nombre de tours du moteur (1) à collecteur dans l'une des zones de fonctionnement.

9. Procédé suivant la revendication 8, caractérisé par l'intégration des valeurs réelles de l'indicateur (8) de vitesse de rotation dans un dispositif (6) de régulation ou de commande prévu en soi notamment pour la commande ou la régulation du moteur (1) à collecteur, notamment dans un microcontrôleur.

10. Procédé suivant au moins l'une des revendications précédentes, caractérisé par un changement de raccordement en fonction de valeurs de consigne mémorisées dans un dispositif (6) de commande ou de régulation, notamment dans un microcontrôleur, du temps de fonctionnement ou du nombre de tours du moteur (1) à collecteur dans l'une des zones de fonctionnement.

**FIG 1**

**FIG 2**

FIG 3

FIG 4

EP 0 726 644 B1